# EUROPEAN PATENT SPECIFICATION

(11) **EP 1 939 076 B1**
(45) Date of publication and mention of the grant of the patent: **15.12.2010**
(21) Application number: 06425876.7
(22) Date of filing: 29.12.2006
(51) Int. Cl.: B62D 65/16, B62D 25/08, B60Q 1/04

(54) **Method of manufacture of headlights for the precision assembly of the same on vehicles**
Verfahren zur Herstellung von Scheinwerfern zur präzisen Anordnung derselben an Fahrzeugen
Procédé de fabrication de phares pour un assemblage précis sur les véhicules

(43) Date of publication of application: 02.07.2008
(73) Proprietor: Automotive Lighting Italia S.p.A., 10078 Venaria Reale (Torino) (IT)
(72) Inventor: Bongiovi, Calogero, 10093 Collegno (IT); Herlin, Jean-Pascal, 20090 Cusago (IT)
(74) Representative: Jorio, Paolo

(56) References cited:
- EP-A- 1 491 401
- US-A1- 2004 160 784

## Description

The present invention relates to a method of manufacture of headlights or other lighting devices, for example lamps, for the precision assembly of the same on vehicles.

It is known that, due to the relatively wide machining tolerances, it is often necessary to perform an alignment of the profile of the headlight with that of the vehicle body, so that the transparent lens of the headlight is arranged in the correct position with respect to the vehicle body; devices for allowing such alignment on line are known for example from DE3629124 , GB511687, and from US 2004/160784 A disclosing a method according the preamble of claim 1; these are however complex to make and to manage and are relatively costly; they further require a direct intervention of operators on the assembly lines and are not therefore practical, where automation of as many on-line assembly operations is sought.

On the other hand, increasing the vehicle body and headlight machining precision to avoid the creation of possible misalignments between the headlight lens profile and the vehicle body would be excessively complex and costly.

It is the object of the present invention to provide a method of manufacture of headlights or lamps, which hereinafter will be both comprised in the more general term of "lighting devices", for the precision assembly of the same on vehicles presenting low costs and an essential simplicity and which above all avoids the need of performing adjustments after the assembly of the headlight or other lighting device on the vehicle body.

According to the present invention, it is thus provided a method of manufacture of a lighting device, thus including in such term also light indicating devices such as lamps, comprising a lens and at least one body adapted to receive therein at least one light source with a corresponding reflector so as to allow in use the precision assembly of the lighting device on a vehicle, as defined in claim 1.

The reflector, which acts as collector of the light flow from the light source, may be replaced by other known optical means of equivalent function, such as for example Fresnel lenses or light guides.

Specifically, the method according to the invention comprises the step of making the body contemplating first catch means on the same, which are complementary in use to second catch means of a vehicle body for the correct positioning of the lens with respect to the vehicle body, where the first catch means are made and provided with a predetermined over-gauge; the method further comprises the steps of:
- arranging the fully assembled lighting device in a machining station, with corresponding catch portions of the lens arranged against corresponding reference elements of the machining station;
- detecting the position of the first catch means with reference to the position of the reference elements, whose position is chosen so as to simulate a correct position in use of the lighting device on the vehicle body;
- comparing the detected position of the first catch means with a nominal coupling position in use of the same to the second catch means; and
- machining the first catch means to remove from the same at least part of said over-gauge so that the first and second catch means are enabled in use, consequent to a reciprocal coupling thereof, to ensure a correct positioning of the lens with respect to the vehicle body.

The first catch means are made in the form of at least one pin or cylindrical hole and of at least one catch abutment obtained on a side and rear portion of the body, facing on the opposite side to the lens, shaped so as to be able, in use, to couple in a complementary manner, but for said over-gauge, with the second catch means of the vehicle body.

In this manner, it is avoided, on one hand, the use of threaded couplings for the positioning of the lighting device on the vehicle body and, on the other hand, the need to manufacture the lighting device with excessively restrictive machining tolerances, while providing the possibility of alignment between lens and vehicle body on three reciprocally perpendicular axes and ensuring a correct positioning of the lens with respect to the vehicle body once on-line assembly is performed, thus without the need for adjustments after the assembly itself on the vehicle body. Finally, a lighting device having a glued lens, e.g. pre-assembled on the headlight, may be used.

Further features and advantages of the present invention will be apparent in the following description of two non-limitative embodiments thereof, made with reference to the figures in the accompanying drawings, in which:
- figure 1 schematically shows an elevation side view, shown in a cross-section taken along a longitudinal plane, of a front headlight of a vehicle and of the main steps of the method for obtaining it for the purpose of an on-line precision assembly thereof, flushed with the vehicle body; and
- figure 2 schematically shows the same elevation side view in cross section of a possible variant of the headlight of figure 1 and the main steps of the method for obtaining it as in figure 1.

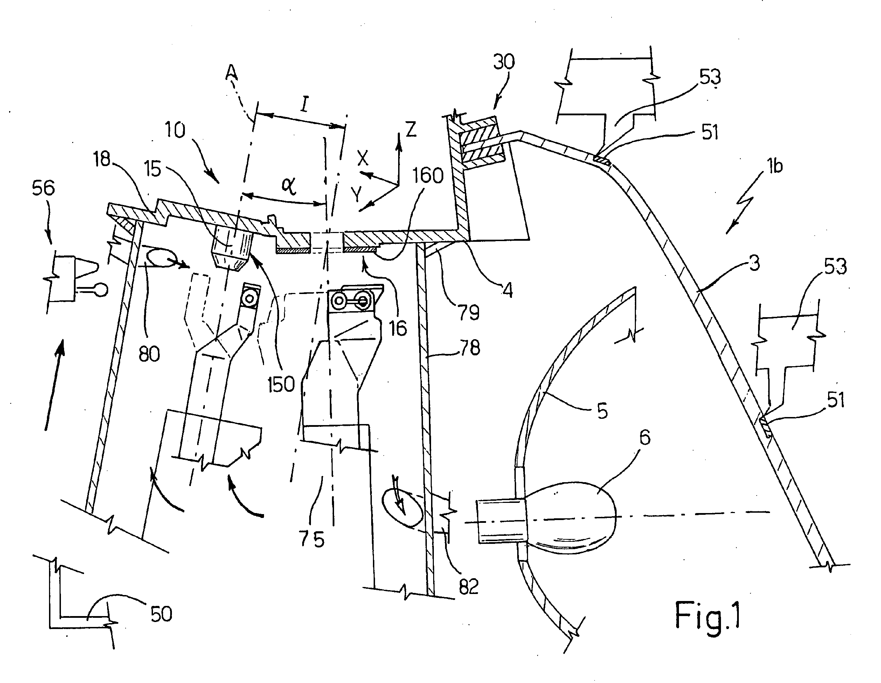

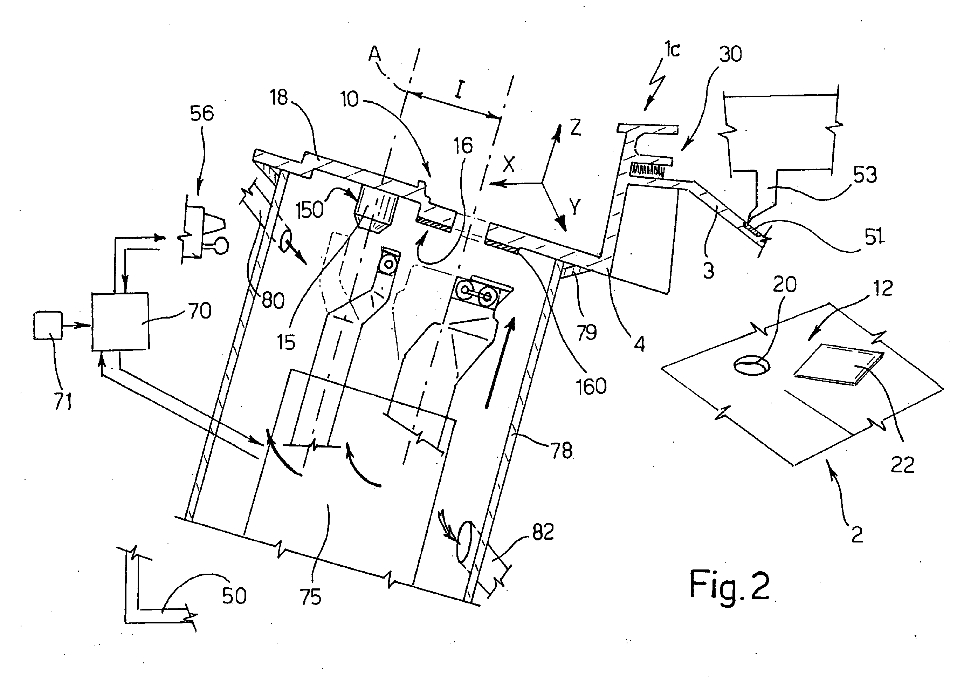

In figures 1 and 2, numerals 1b and 1c respectively indicate as a whole a lighting device for vehicles in the case in point consisting of a headlight or front lamp intended to be mounted in use on a body 2 (figure 2) of the vehicle. Lighting devices 1b and 1c each comprise a lens 3 and at least one body 4 adapted to receive therein, facing lens 3 (figure 1), at least one reflector 5 with a corresponding light source 6.

In both headlights 1b, 1c, body 4 is provided, to allow in use the precision assembly of lighting device 1b,1c on vehicle body 2, as will be seen, with first catch means 10 complementary in use to second catch means 12 of vehicle body 2, intended to allow the correct positioning of the lens with respect to the body during the step of assembling the headlight on the vehicle. According to a fundamental aspect of the invention, with the term "complementary catch means" are intended means for the coupling of body 4 to vehicle body 2 adapted to allow, by direct contact, a predetermined reciprocal positioning in a three X, Y and Z axes reference system; they consequently do not include threaded or otherwise slanted plane couplings.

In the non-limitative case in point shown, catch means 10 are made in the form of at least one cylindrical pin 15 having axis of symmetry A, and of at least one flat catch abutment 16 and are obtained on a side and rear portion 18 of body 4, facing on the opposite side to lens 3; complementary catch means 12 are, on the other hand, made on vehicle body 2 in the form of a cylindrical hole 20 intended to accommodate pin 15 essentially without clearance, i.e. with dimensional tolerances such as to determine a free running fit (e.g. h7/G8 according to the shaft-basis system) or at the most a loose fit (e.g. h7/J8), and of a flat catch portion 22; it is apparent to a person skilled in the art that hole 20 could belong to catch means 10, while pin 15 would in this case belong to catch means 12 and would thus be made integral with vehicle body 2, e.g. by projection welding.

In both cases, catch abutment 16 is obtained so as to lay on a plane perpendicular to an axis Z of the reference system, with respect to which axis of symmetry A of pin 15 (or cylindrical hole 20, if this belongs to catch means 10) is arranged either parallel (figure 1) or askew (figure 2) by an angle α of predetermined entity, e.g. 10°. Essentially, the only difference between headlight 1b and headlight 1c shown in figures 1 and 2 is indeed the reciprocal position of the two axes Z and A, both possible according to the invention.

According to an aspect of the invention, during a step of assembling the lighting device 1b,1c, lens 3 is fixed by gluing, mechanical fastening or welding to a peripheral edge 30 of body 4 so as to be pre-assembled before assembly of body 4 on vehicle body 2.

According to the invention, lighting device 1b, 1c is obtained by means of a method of manufacture comprising, in addition to the aforesaid step of assembling lens 3 on body 4, the step of making body 4 thus contemplating on the same the presence of catch means 10, which are provided, according to the main aspect of the invention, with an over-gauge 150 on pin 15 and 160 on flat catch 16, both over-gauges having a predetermined entity, with respect to the dimensions needed to pin 15 and flat catch 16 to couple with the catch means 12 of the vehicle body 2 in the previously described manner.

Actually, pin 15 is manufactured with an external side diameter larger than the nominal diameter and catch abutment 16 itself is manufactured thicker than the nominal thickness needed to couple in use with catch abutment 22 of vehicle body 2. Essentially, with body 4 manufactured (usually obtained by injection moulding of a synthetic plastic material) and coupled to lens 3 and with all its other components (such as for example reflector 5 with light source 6) previously assembled on/in body 4, body 4 would at this point be incapable of coupling with vehicle body 2.

According to the invention, the method of manufacture of lighting device 1 (1b, 1c) thus contemplates the step of arranging fully assembled lighting device 1b or 1c, before sending it to the assembly line onto vehicle body 2, on a machining station 50, with corresponding (known) catch portions 51 of lens 3 arranged against corresponding reference elements 53 of machining station 50.

At the end of this preliminary step, the method of the invention contemplates the step of detecting, e.g. by means of a mobile measuring head 56 of station 50, provided with an optical detector and/or a feeler, the position of catch means 10 with reference to the position of reference elements 53, whose position has been selected so as to simulate, with lens 3 arranged with its portions 51 resting against elements 53, the correct position in use of lighting device 1b or 1c on vehicle body 2, i.e. with pin 15 and abutment 16 being theoretically aligned and facing corresponding hole 20 and abutment 22 of vehicle body 2.

Subsequently, while lighting device 1b, 1c is still onto station 50, the detected position of catch means 10 (i.e. of pin 15 and flat abutment 16) is compared with a nominal coupling position in use of the same to catch means 12 and, if required, a mechanical machining of catch means 10 is performed to remove from the same at least at part of over-gauge 150, 160 so that pin 15 and abutment 16 are made, on one side, able to couple with hole 20 and with abutment 22 and, on the other side, are put in condition so as to ensure a correct positioning in use of lens 3 with respect to the vehicle body in consequence of the reciprocal coupling between catch means 10 and catch means 12.

This is obtained, for example, by performing an "eccentric" mechanical machining of pin 15, meaning that it is subjected to a milling of its side surface so that the axis of the milling operation does not coincide with initial axis of symmetry A of pin 15 but is displaced with respect to axis Z of abutment 16 along either one or both of axes X and Y of the reference system. Finally, if abutment 16 is defined by an annular portion of flat surface having the axis Z as axis of symmetry, as in the shown examples, at the end of the mechanical machining a center distance I between axis Z and axis A of pin 15 will be varied, as if a pin 15 made with nominal diameter (that of hole 20) were physically displaced with respect to abutment 16.

The same applies to abutment 16, for which a mechanical frontal milling machining aimed at varying the thickness will correspond to a displacement of abutment 16, made at nominal thickness (the thickness needed to couple with abutment 22) along axis Z.

According to the invention, both predetermined over-gauge 150 and 160 is selected so that it is possible to manufacture lighting device 1b, 1c according to less restrictive machining tolerances than those needed to manufacture in use the correct positioning of its lens 3 with respect to the vehicle body and, specifically, predetermined over-gauges 150, 160 are manufactured with a value greater than the maximum admissible dimensional deviation according to the machining tolerances adopted for lighting device 1b,1c.

In conclusion, according to the invention, pin 15 and abutment 16 are shaped so as to be adapted, in use, to couple in a complementary manner with hole 20 and abutment 22 but for over-gauge 150 and 160, respectively, and pin 15 and abutment 16 are then machined so as to eliminate part of over-gauge 150,160 asymmetrically with respect to the initial geometry of pin 15 and abutment 16, but "symmetrically" with respect to possible relative position deviations of the same with respect to complementary catch means 12, inferred from the measurements made in station 50.

Specifically, the mentioned step of comparing the measured and the nominal values is performed by a control unit 70 of machining station 50 (figure 2) which receives in input, for example from a memory unit 71, the machining tolerance values adopted for lighting device 1b, 1c and vehicle body 2, as well as the measurements performed by head 56.

The step of machining the catch means 10 is a mechanical machining by chip forming of at least part of over-gauge 150,160, with which pin 15 and abutment 16 are manufactured, which machining is performed by means of a multiple milling head 75, also at the same time on all catch means 10, i.e. on pin 15 and on abutment 16, by means of parallel (figure 1) or oblique (figure 2) axis machining.

Preferably, in order to avoid the risk of damaging lighting device 1, already finished except for residual over-gauges 150,160, multiple milling head 75 is enclosed within a suction hood 78 so as to be coupled to body 4 near catch means 10, i.e. at portion 18, preferably in a fluid-tight manner, e.g. by means of a peripheral suction cap seal 79. Suction hood 78 is preferably provided with injection means 80 of a gaseous flow arranged near the zone to be machined and a chip suction and evacuation tube 82, arranged on the side diametrically opposite to injection means 80 of the gaseous fluid, which may be air or also other inert fluid.

## Claims

1. A method of manufacture of a lighting device, comprising at least one lens (3) and at least one body (4) adapted to receive therein at least one light source possibly provided with at least one corresponding reflector (5), to allow in use the precision assembly of the lighting device on a vehicle, comprising the step of manufacturing said body (4) contemplating on first catch means (10) complementary in use to second catch means of a body of said vehicle for determining the correct positioning in use of the lens with respect to the vehicle body; **characterised in that** said first catch means (10) are made so as to be provided with a predetermined over-gauge (150;160); the method further comprising the steps of:
- arranging the fully assembled lighting device (1b;1c) in a machining station (50), with corresponding catch portions of the lens (3) arranged against corresponding reference elements (53) of the machining station (50);
- detecting the position of the first catch means (10) with reference to the position of the reference elements (53), whose position is chosen so as to simulate a correct position of the lighting device on the vehicle body in use;
- comparing the detected position of the first catch means (10) with a nominal coupling position in use of the same to the second catch means (12); and
- machining the first catch means (10) to remove from the same at least part of said over-gauge so that the first (10) and second (12) catch means are enabled, consequent to reciprocal coupling thereof in use, to ensure a correct arrangement of the lens (3) with respect to the vehicle body.

2. A method according to claim 1, **characterised in that** said predetermined over-gauge (150;160) is chosen so that it is possible to manufacture the lighting device according to less restrictive machining tolerances than those needed to obtain the correct positioning in use of its lens with respect to the vehicle body.

3. A method according to claim 1 or 2, **characterised in that** said predetermined over-gauge (150;160) is manufactured with a greater value than the maximum admissible dimensional deviation value according to the machining tolerances adopted for the lighting device.

4. A method according to any of the preceding claims, **characterised in that**, during a step of assembling the lighting device, said lens (3) is fixed by gluing, mechanical fixing or welding to an peripheral edge of said body.

5. A method according to any of the preceding claims, **characterised in that** said first catch means (10;16) are made in the form of at least one pin (15) or cylindrical hole and of at least one catch abutment obtained on a side and rear portion of the body and shaped so as to be adapted, in use, to couple in a complementary manner, but for said over-gauge (150;160), with said second catch means of the vehicle body.

6. A method according to any of the preceding claims, **characterised in that** said first step of detecting the position of the first catch means is performed in said station by means of a mobile measuring head (56) provided with an optical detector and/or feeler.

7. A method according to any of the preceding claims, **characterised in that** said step of comparing is performed by a control unit (76) of the machining station, which receives in input the machining tolerance values adopted for the lighting device and the vehicle body.

8. A method according to any of the preceding claims, **characterised in that** said step of machining the first catch means is a mechanical machining by chip forming of at least part of said over-gauge (150;160), with which the first catch means are made, and which is performed by means of a multiple milling head (75), at the same time on all first catch means.

9. A method according to claim 8, **characterised in that** said multiple milling head (75) is enclosed in a suction hood (78) shaped so as to be coupled, preferably in a fluid-tight manner, to said body in proximity of said first catch means, preferably provided with gaseous flow injection means.

## Patentansprüche

1. Ein Verfahren zur Herstellung einer Beleuchtungsvorrichtung, mindestens eine Streuscheibe (3) und mindestens einen Körper (4) aufweisend, angepasst, darin mindestens eine Lichtquelle, eventuell mit mindestens einem entsprechenden Reflektor (5) versehen, aufzunehmen, um bei der Anwendung die präzise Anordnung der Beleuchtungsvorrichtung an einem Fahrzeug zu erlauben, aufweisend den Schritt des Herstellens des Körpers (4) mit Blick auf die erste Sperreinrichtung (10), die bei der Anwendung zur zweiten Sperreinrichtung einer Karosserie des Fahrzeugs komplementär ist, um bei der Anwendung die korrekte Position der Streuscheibe in Bezug auf die Fahrzeugkarosserie zu bestimmen; **dadurch gekennzeichnet, dass** die erste Sperreinrichtung (10) mit einem zuvor bestimmten Übermaß (150; 160) hergestellt wird; wobei das Verfahren ferner folgende Schritte aufweist:
Anordnen der vollständig zusammengebauten Beleuchtungsvorrichtung (1b; 1c) in einer Bearbeitungsstation (50), wobei entsprechende Sperrteile der Streuscheibe (3) gegen entsprechende Bezugselemente (53) der Bearbeitungsstation (50) angeordnet sind;
Erfassen der Stellung der ersten Sperreinrichtung (10) mit Bezug auf die Stellung der Bezugselemente (53), deren Stellung so gewählt wird, dass sie bei der Anwendung eine korrekte Stellung der Beleuchtungsvorrichtung an der Fahrzeugkarosserie simuliert;
Vergleichen der erfassten Stellung der ersten Sperreinrichtung (10) mit einer Nennkoppelstellung bei der Anwendung derselben zur zweiten Sperreinrichtung (12); und
Bearbeiten der ersten Sperreinrichtung (10), um mindestens einen Teil des Übermaßes davon zu entfernen, damit die erste (10) und die zweite (12) Sperreinrichtung infolge ihrer gegenseitigen Koppelung bei der Anwendung befähigt werden, eine korrekte Anordnung der Streuscheibe (3) in Bezug auf die Fahrzeugkarosserie sicherzustellen.

2. Verfahren gemäß Anspruch 1, **dadurch gekennzeichnet, dass** das zuvor bestimmte Übermaß (150; 160) so gewählt wird, dass es möglich ist, die Beleuchtungsvorrichtung entsprechend weniger strengen Bearbeitungstoleranzen herzustellen als diejenigen, die benötigt werden, um bei der Anwendung die korrekte Stellung ihrer Streuscheibe in Bezug auf die Fahrzeugkarosserie zu erreichen.

3. Verfahren gemäß Anspruch 1 oder 2, **dadurch gekennzeichnet, dass** das zuvor bestimmte Übermaß (150; 160) mit einem höheren Wert als die maximal zulässige Maßabweichung gemäß den für die Beleuchtungsvorrichtung angewandten Bearbeitungstoleranzen hergestellt wird.

4. Verfahren gemäß irgendwelchen der vorangegangenen Ansprüche, **dadurch gekennzeichnet, dass** während eines Schritts des Zusammenbauens der Beleuchtungsvorrichtung die Streuscheibe (3) durch Kleben, mechanisches Befestigen oder Schweißen an einem Umfangsrand des Körpers fixiert wird.

5. Verfahren gemäß irgendwelchen der vorangegangenen Ansprüche, **dadurch gekennzeichnet, dass** die erste Sperreinrichtung (10; 16) in Form mindestens eines Stifts (15) oder eines zylindrischen Lochs und mindestens eines Sperranschlags, auf einer Seite und einem hinteren Teil des Körpers gewonnen und entsprechend geformt, um bei der Anwendung komplementär, aber für das Übermaß (150; 160), an die zweite Sperreinrichtung der Fahrzeugkarosserie gekoppelt zu werden, gebildet wird.

6. Verfahren gemäß irgendwelchen der vorangegangenen Ansprüche, **dadurch gekennzeichnet, dass** der erste Schritt des Erfassens der Stellung der ersten Sperreinrichtung in der Station mittels eines beweglichen Messkopfs (56), der mit einem optischen Detektor und/oder Fühler versehen ist, durchgeführt wird.

7. Verfahren gemäß irgendwelchen der vorangegangenen Ansprüche, **dadurch gekennzeichnet, dass** der Schritt des Vergleichens von einer Steuereinheit (76) der Bearbeitungsstation durchgeführt wird, die als Eingang die für die Beleuchtungsvorrichtung und die Fahrzeugkarosserie angewandten Bearbeitungstoleranzwerte empfängt.

8. Verfahren gemäß irgendwelchen der vorangegangenen Ansprüche, **dadurch gekennzeichnet, dass** der Schritt des Bearbeitens der ersten Sperreinrichtung eine mechanische, spanabhebende Bearbeitung mindestens eines Teils des Übermaßes (150; 160) ist, mit dem die erste Sperreinrichtung hergestellt ist, und der mittels eines Mehrfachfräskopfes (75) gleichzeitig an allen ersten Sperreinrichtungen durchgeführt wird.

9. Verfahren gemäß Anspruch 8, **dadurch gekennzeichnet, dass** der Mehrfachfräskopf (75) in einer Saughaube (78) eingeschlossen ist, die so geformt ist, dass sie vorzugsweise in einer medienundurchlässigen Art an den Körper in der Nähe der ersten Sperreinrichtung, vorzugsweise mit einer Gasstromeinpresseinrichtung versehen, gekoppelt ist.

## Revendications

1. Procédé pour fabriquer un dispositif d'éclairage, comprenant au moins une lentille (3) et au moins un corps (4) adapté pour recevoir à l'intérieur de ce dernier au moins une source de lumière éventuellement prévue avec au moins un réflecteur (5) correspondant pour permettre, à l'usage, l'assemblage précis du dispositif d'éclairage sur un véhicule, comprenant l'étape consistant à fabriquer ledit corps (4) en envisageant des premiers moyens d'attache (10) complémentaire, à l'usage, de deuxièmes moyens d'attache d'un corps dudit véhicule afin de déterminer le positionnement correct, à l'usage, de la lentille par rapport au corps de véhicule ; **caractérisé en ce que** lesdits premiers moyens d'attache (10) sont réalisés afin d'être prévus avec un excès de matière (150, 160) ; le procédé comprenant en outre les étapes consistant à :
agencer le dispositif d'éclairage (1b ; 1c) complètement assemblé dans une station d'usinage (50) avec des parties d'attache correspondantes de la lentille (3) agencées contre des éléments de référence (53) correspondants de la station d'usinage (50) ;
détecter la position des premiers moyens d'attache (10) en référence à la position des éléments de référence (53), dont la position est choisie afin de simuler une position correcte du dispositif d'éclairage sur le corps de véhicule à l'usage ;
comparer la position détectée des premiers moyens d'attache (10) avec une position de couplage nominale, à l'usage, de ces derniers par rapport aux deuxièmes moyens d'attache (12) ; et
usiner les premiers moyens d'attache (10) pour retirer de ces derniers, au moins une partie dudit verre en excès de sorte que les premiers (10) et les deuxièmes (12) moyens d'attache peuvent, suite à leur couplage réciproque, à l'usage, garantir un agencement correct de la lentille (3) par rapport au corps de véhicule.

2. Procédé selon la revendication 1, **caractérisé en ce que** ladite matière en excès prédéterminé (150 ; 160) est choisi de sorte qu'il est possible de fabriquer le dispositif d'éclairage selon des tolérances d'usinage moins restrictives que celles nécessaires pour obtenir le positionnement correct, à l'usage, de leur lentille par rapport au corps de véhicule.

3. Procédé selon la revendication 1 ou 2, **caractérisé en ce que** ladite matière en excès prédéterminée (150 ; 160) est fabriqué avec une plus grande valeur que la valeur de déviation dimensionnelle admissible maximum selon les tolérances d'usinage adoptées pour le dispositif d'éclairage.

4. Procédé selon l'une quelconque des revendications précédentes, **caractérisé en ce que**, pendant une étape d'assemblage du dispositif d'éclairage, ladite lentille (3) est fixée par collage, fixation mécanique ou soudage sur un bord périphérique dudit corps.

5. Procédé selon l'une quelconque des revendications précédentes, **caractérisé en ce que** lesdits premiers moyens d'attache (10 ; 16) sont réalisés sous la forme d'au moins une broche (15) ou d'un trou cylindrique et d'au moins une butée d'attache obtenue sur une partie latérale et arrière du corps et formés afin d'être adaptés, à l'usage, pour se coupler d'une manière complémentaire, excepté pour ladite matière en excès (150 ; 160), avec lesdits deuxièmes moyens d'attache du corps de véhicule.

6. Procédé selon l'une quelconque des revendications précédentes, **caractérisé en ce que** ladite première étape consistant à détecter la position des premiers moyens d'attache est réalisée dans ladite station au moyen d'une tête de mesure mobile (56) prévue avec un détecteur optique et/ou un calibre d'épaisseur.

7. Procédé selon l'une quelconque des revendications précédentes, **caractérisé en ce que** ladite étape de comparaison est réalisée par une unité de commande (76) de la station d'usinage, qui reçoit en entrée, les valeurs de tolérance d'usinage adoptées pour le dispositif d'éclairage et le corps de véhicule.

8. Procédé selon l'une quelconque des revendications précédentes, **caractérisé en ce que** ladite étape d'usinage des premiers moyens d'attache est un usinage mécanique par formation d'écailles d'au moins une partie de ladite matière en excès (150 ; 160), avec lequel les premiers moyens d'attache sont réalisés, et qui est réalisée au moyen d'une tête de fraisage multiple (75), en même temps sur tous les premiers moyens d'attache.

9. Procédé selon la revendication 8, **caractérisé en ce que** ladite tête de fraisage multiple (75) est enfermée dans une hotte d'aspiration (78) formée afin d'être couplée, de préférence d'une manière étanche au fluide, audit corps à proximité desdits premiers moyens d'attache, de préférence prévus avec des moyens d'injection de flux gazeux.
